(19) 

Europäisches Patentamt
European Patent Office
Office européen des brevets

(11) **EP 4 342 571 A1**

(12) **EUROPEAN PATENT APPLICATION**
published in accordance with Art. 153(4) EPC

(43) Date of publication:
**27.03.2024 Bulletin 2024/13**

(21) Application number: **22828356.0**

(22) Date of filing: **17.06.2022**

(51) International Patent Classification (IPC):
**B01D 53/047** (2006.01)

(52) Cooperative Patent Classification (CPC):
**B01D 53/047**

(86) International application number:
**PCT/JP2022/024372**

(87) International publication number:
**WO 2022/270439 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2021 JP 2021104615**

(71) Applicant: **JFE Steel Corporation**
**Tokyo 100-0011 (JP)**

(72) Inventors:
- **SHIGAKI, Nobuyuki**
  **Tokyo 100-0011 (JP)**
- **NISHIKAWA, Yuta**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **GAS SEPARATION FACILITY AND GAS SEPARATION METHOD**

(57) It is to efficiently separate a specific gas component contained in a raw material gas using a PSA method. A gas separation facility 11 that separates and recovers a gas component 1 from a raw material gas containing at least the gas component 1 and a gas component 2 by a pressure swing adsorption method includes an adsorption tower 12 filled with an adsorbent that adsorbs and desorbs the gas component 1 and the gas component 2, introduces the raw material gas into the adsorption tower 12 for adsorption of the raw material gas to the adsorbent, and evacuates the adsorption tower 12 for desorption of the raw material gas that is adsorbed on the adsorbent. The gas separation facility 11 further includes a temperature measurement unit 26 that measures temperature of the adsorbent, a temperature adjustment unit 31 that adjusts temperature of the adsorbent, and a control unit 35 that controls the temperature adjustment unit 31 such that temperature of the adsorbent becomes target temperature. The target temperature is determined by comparing temperature-related change ratios of effective adsorption amounts of the gas component 1 and the gas component 2 to the adsorbent.

FIG. 1

EP 4 342 571 A1

**Description**

TECHNICAL FIELD

The present invention relates to a gas separation facility and a gas separation method.

BACKGROUND ART

Conventionally, a pressure swing adsorption (PSA) method has been used as a method for separating a specific gas component contained in a raw material gas. The PSA method is a gas separation method utilizing a fact that adsorption amounts of gas components to adsorbents vary depending on gas species and partial pressures.
For example, Patent Literature 1 discloses "a gas separation and recovery method, wherein the method does not include a rinsing step, the desorption step is divided into a plurality of time periods, and the desorbed gases are separately recovered in the respective time periods" as a gas separation method using a PSA method ([Claim 1]). According to this method, "a gas can be recovered while gas concentration is increased without a rinsing step. Thus, a target gas component can be separated and recovered in a high concentration with small power consumption" ([0013]).

CITATION LIST

PATENT LITERATURE

Patent Literature 1: JP 2018-114464 A

SUMMARY OF INVENTION

TECHNICAL PROBLEMS

In recent years, it has been desired to efficiently separate specific gas components contained in raw material gas.
For example, recently, carbon capture and utilization (CCU) for producing useful chemicals such as methanol from carbon dioxide ($CO_2$) discharged from an ironmaking process or the like has attracted attention. In this case, it is desired to efficiently separate $CO_2$ from blast furnace gas (raw material gas containing $CO_2$, CO, and $N_2$) discharged from the ironmaking process.
The present invention has been made in view of the above points, and an object of the present invention is to efficiently separate a specific gas component contained in a raw material gas using a PSA method.

SOLUTION TO PROBLEMS

As a result of intensive studies, the present inventors have found that the above object is achieved by adopting the following configuration, and have completed the present invention.
That is, the present invention provides the following [1] to [16].

[1] A gas separation facility that separates and recovers a gas component 1 from a raw material gas containing at least the gas component 1 and a gas component 2 by a pressure swing adsorption method, the gas separation facility comprising: an adsorption tower filled with an adsorbent that adsorbs and desorbs the gas component 1 and the gas component 2; an introduction unit that introduces the raw material gas into the adsorption tower for adsorption of the raw material gas to the adsorbent; an evacuation unit that evacuates the adsorption tower for desorption of the raw material gas that is adsorbed on the adsorbent; a temperature measurement unit that measures temperature of the adsorbent; a temperature adjustment unit that adjusts temperature of the adsorbent; and a control unit that controls the temperature adjustment unit such that temperature of the adsorbent becomes target temperature, wherein the target temperature is temperature determined by comparing temperature-related change ratios of effective adsorption amounts of the gas component 1 and the gas component 2 to the adsorbent.
[2] The gas separation facility according to [1], wherein the target temperature is a temperature at which the temperature-related change ratio of an effective adsorption amount of the gas component 1 to the adsorbent is smaller than the temperature-related change ratio of an effective adsorption amount of the gas component 2 to the adsorbent.
[3] The gas separation facility according to [1] or [2], wherein the control unit determines the target temperature according to the following steps 1 to 3:

step 1: for the gas component 1 and the gas component 2, effective adsorption amount $\Delta Q_i(T)$, which is a change in an equilibrium adsorption amount corresponding to a pressure swing range, is calculated from an adsorption isotherm of gas component i (i = 1, 2) at temperature T;

step 2: for the gas component 1 and the gas component 2, a temperature-related change ratio of effective adsorption amount $\Delta Q_i(T)$ between reference temperature $T_A$ and changed temperature $T_B$ changed from the reference temperature $T_A$, $X_i(T_A, T_B) = 1 - \{\Delta Q_i(T_B)/\Delta Q_i(T_A)\}$, where $T_A < T_B$, is calculated; and

step 3: temperature-related change ratios of the effective adsorption amounts $X_i(T_A, T_B)$ of the gas component 1 and the gas component 2 are compared, and changed temperature $T_B$ satisfying the following formula (1), where $0 < \alpha \leq 1$, is determined as a target temperature,

$$X_1(T_A, T_B) < \alpha \times X_2(T_A, T_B) \quad \ldots \quad (1).$$

[4] The gas separation facility according to any one of [1] to [3], wherein the evacuation unit includes an outlet line that discharges the raw material gas desorbed from the adsorbent, and the outlet line is branched into a branch line from which the gas component 1 is discharged and a branch line from which the gas component 2 is discharged.

[5] The gas separation facility according to any one of [1] to [4], wherein the temperature adjustment unit indirectly adjusts temperature of the adsorbent by adjusting temperature of the raw material gas.

[6] The gas separation facility according to [5], wherein the temperature adjustment unit includes a heat exchanger capable of variably controlling at least one of a flow ratio of heat medium and a heat transfer area, and indirectly adjusts temperature of the adsorbent by adjusting temperature of the raw material gas using the heat exchanger.

[7] The gas separation facility according to [6], comprising a gas circulation unit that circulates part of the raw material gas on an outlet side of the heat exchanger to an inlet side of the heat exchanger.

[8] A gas separation method for separating and recovering a gas component 1 from a raw material gas containing at least the gas component 1 and a gas component 2 by a pressure swing adsorption method, the gas separation method comprising: introducing the raw material gas into an adsorption tower filled with an adsorbent that adsorbs and desorbs the gas component 1 and the gas component 2 to adsorb the raw material gas to the adsorbent; desorbing the raw material gas that is adsorbed on the adsorbent by evacuating the adsorption tower, measuring a temperature of the adsorbent using a temperature measurement unit that measures temperature of the adsorbent; and controlling a temperature adjustment unit that adjusts temperature of the adsorbent such that temperature of the adsorbent becomes a target temperature, wherein the target temperature is temperature determined by comparing temperature-related change ratios of effective adsorption amounts of the gas component 1 and the gas component 2 to the adsorbent.

[9] The gas separation method according to [8], wherein the target temperature is temperature at which the temperature-related change ratio of an effective adsorption amount of the gas component 1 to the adsorbent is smaller than the temperature-related change ratio of an effective adsorption amount of the gas component 2 to the adsorbent.

[10] The gas separation method according to [8] or [9], wherein the target temperature is determined according to the following steps 1 to 3:

step 1: for the gas component 1 and the gas component 2, effective adsorption amount $\Delta Q_i(T)$, which is a change in an equilibrium adsorption amount corresponding to a pressure swing range, is calculated from an adsorption isotherm of gas component i (i = 1, 2) at temperature T;

step 2: for the gas component 1 and the gas component 2, a temperature-related change ratio of effective adsorption amount $\Delta Q_i(T)$ between reference temperature $T_A$ and changed temperature $T_B$ changed from the reference temperature $T_A$, $X_i(T_A, T_B) = 1 - \{\Delta Q_i(T_B)/\Delta Q_i(T_A)\}$, where $T_A < T_B$, is calculated; and

step 3: temperature-related change ratios of the effective adsorption amounts $X_i(T_A, T_B)$ of the gas component 1 and the gas component 2 are compared, and changed temperature $T_B$ satisfying the following formula (1), where $0 < \alpha \leq 1$, is determined as a target temperature,

$$X_1(T_A, T_B) < \alpha \times X_2(T_A, T_B) \quad \ldots \quad (1).$$

[11] The gas separation method according to any one of [8] to [10], wherein the gas component 1 and the gas component 2 are adsorbed to the adsorbent, and the gas component 1 and the gas component 2 that are adsorbed on the adsorbent are desorbed in divided time periods.

[12] The gas separation method according to any one of [8] to [11], comprising: having a process from adsorption to desorption of the raw material gas to and from the adsorbent as one cycle, after at least 5 cycles, measuring temperature of the adsorbent using the temperature measurement unit, and controlling the temperature adjustment unit to adjust temperature of the adsorbent to a target temperature.

[13] The gas separation method according to any one of [8] to [12], wherein a maximum value of a temperature amplitude measured by the temperature measurement unit is used as temperature of the adsorbent.

[14] The gas separation method according to any one of [8] to [13], wherein the temperature adjustment unit indirectly adjusts temperature of the adsorbent by adjusting temperature of the raw material gas.

[15] The gas separation method according to [14], wherein the temperature adjustment unit includes a heat exchanger capable of variably controlling at least one of a flow ratio of heat medium and a heat transfer area, and indirectly adjusts temperature of the adsorbent by adjusting temperature of the raw material gas using the heat exchanger.

[16] The gas separation method according to [15], comprising circulating part of the raw material gas on an outlet side of the heat exchanger to an inlet side of the heat exchanger.

ADVANTAGEOUS EFFECTS OF INVENTION

According to the present invention, a specific gas component contained in a raw material gas can be efficiently separated using a PSA method.

BRIEF DESCRIPTION OF DRAWINGS

[FIG. 1] FIG. 1 is a schematic diagram showing a gas separation facility of a first embodiment.
[FIG. 2] FIG. 2 is a graph showing an example of an adsorption isotherm of $CO_2$ measured with temperature being changed.
[FIG. 3] FIG. 3 is a graph showing an example of an adsorption isotherm of CO measured with temperature being changed.
[FIG. 4] FIG. 4 is a graph showing an example of an adsorption isotherm of $N_2$ measured with temperature being changed.
[FIG. 5] FIG. 5 is a graph showing an example of adsorption isotherms of a gas component 1 ($CO_2$) and a gas component 2 ($N_2$).
[FIG. 6] FIG. 6 is a graph showing an example of adsorption isotherms of a gas component 1 ($CO_2$) and a gas component 2 ($N_2$) when the temperature is changed from reference temperature $T_A$ to changed temperature $T_B$.
[FIG. 7] FIG. 7 is a schematic diagram showing a gas separation facility of a second embodiment.
[FIG. 8] FIG. 8 is a schematic diagram showing a gas separation facility of a third embodiment.
[FIG. 9] FIG. 9 is a schematic diagram showing a gas separation facility used in Examples 1 to 2 and Comparative Example 1.
[FIG. 10] FIG. 10 is a graph showing $CO_2$ recovery ratios in Examples 1 to 2 and Comparative Example 1.

DESCRIPTION OF EMBODIMENTS

[First Embodiment]

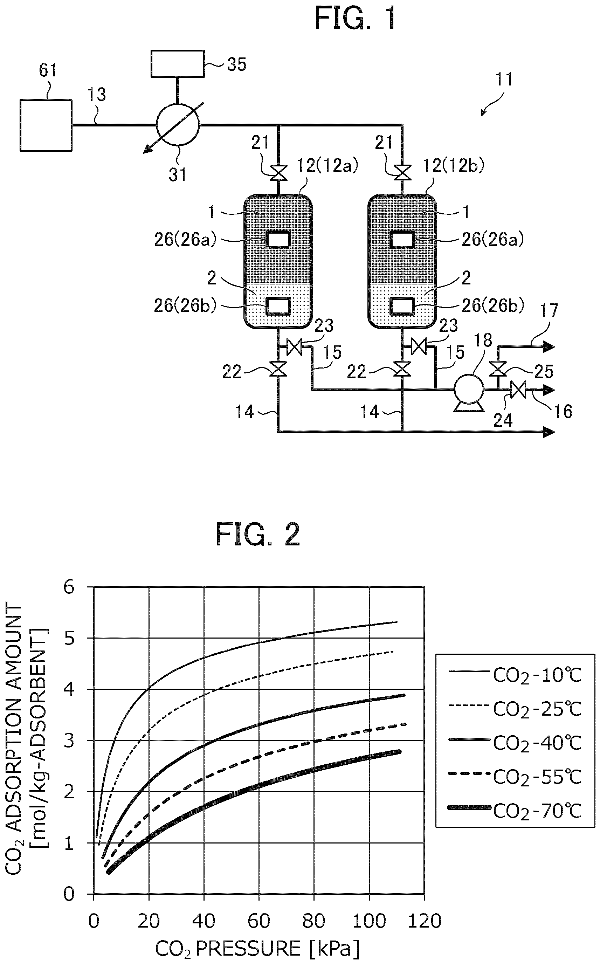

Hereinafter, a gas separation facility will be described with reference to FIGS. 1 to 9. The following description also serves as a description of a gas separation method.

<Configuration of gas separation facility>

FIG. 1 is a schematic diagram showing a gas separation facility 11 of a first embodiment.

The gas separation facility 11 is a facility that separates and recovers a gas component 1 from a raw material gas containing at least the gas component 1 (for example, $CO_2$) and a gas component 2 (for example, $N_2$) by a pressure swing adsorption (PSA) method.

The gas separation facility 11 mainly includes a vertical adsorption tower 12 through which gas flows in the vertical direction. The adsorption tower 12 is filled with an adsorbent (not shown) that adsorbs and desorbs the gas component 1 and the gas component 2.

The gas separation facility 11 shown in FIG. 1 is a so-called multi tower type, and two adsorption towers 12 (adsorption tower 12a and adsorption tower 12b) are arranged in parallel. The number of the adsorption towers 12 is not limited to two, and may be one or three or more.

An introduction line 13 through which the raw material gas flows from a raw material gas supply source 61 is connected to one end side (upper end side in FIG. 1) of the adsorption tower 12.

The raw material gas supply source 61 is, for example, a blast furnace that discharges blast furnace gas as the raw material gas.

The introduction line 13 introduces the raw material gas (the gas containing at least the gas component 1 and the gas component 2) into the adsorption tower 12 in order to allow the raw material gas to be adsorbed to the adsorbent. An on-off valve 21 is provided in the middle of the introduction line 13. The introduction line 13 constitutes an introduction unit.

An off-gas outlet line 14 is connected to the other end side (lower end side in FIG. 1) of the adsorption tower 12. The off-gas is raw material gas that was introduced into the adsorption tower 12 but was not adsorbed to the adsorbent. The off-gas is discharged via the off-gas outlet line 14. An on-off valve 22 is provided in the middle of the off-gas outlet line 14.

A desorbed gas outlet line 15 is connected to the off-gas outlet line 14 upstream of the on-off valve 22.

The desorbed gas outlet line 15 is connected to a vacuum pump 18. By driving the vacuum pump 18, the inside of the adsorption tower 12 is evacuated, and the raw material gas adsorbed to the adsorbent is desorbed. The raw material gas desorbed from the adsorbent (desorbed gas) is discharged via the desorbed gas outlet line 15. An on-off valve 23 is provided upstream of the vacuum pump 18 in the desorbed gas outlet line 15.

The desorbed gas outlet line 15 is branched on the downstream side of the vacuum pump 18 (discharge side of the vacuum pump 18), and is provided with a branch line 16 and a branch line 17.

The branch line 16 and the branch line 17 are respectively provided with an on-off valve 24 and an on-off valve 25.

Of the gas component 1 and the gas component 2 contained in the raw material gas, for example, a gas containing the gas component 2 that is not desired to be recovered (impurity gas) is discharged via the branch line 16. On the other hand, the gas containing the gas component 1 desired to be recovered (recovered gas) is discharged via the branch line 17.

The desorbed gas outlet line 15, the branch line 16, the branch line 17, and the vacuum pump 18 constitute an evacuation unit.

The adsorption tower 12 is provided with a temperature measurement unit 26 that measures the temperature of the adsorbent filled in the adsorption tower 12.

The temperature measurement unit 26 is not particularly limited, but is, for example, a thermocouple. When the temperature measurement unit 26 is a thermocouple, a sheath tube (not illustrated) for a thermocouple that reaches the inside of the adsorption tower 12 may be provided in the outer peripheral portion of the adsorption tower 12. By inserting a thermocouple into the sheath tube, the temperature of the adsorbent filled in the adsorption tower 12 can be easily measured.

A plurality of temperature measurement units 26 may be provided for each adsorption tower 12. For example, in FIG. 1, a temperature measurement unit 26a and a temperature measurement unit 26b are disposed separately in the vertical direction of the adsorption tower 12. As a result, the temperature of the adsorbent can be measured without bias.

A temperature adjustment unit 31 is provided in the middle of the introduction line 13 from the raw material gas supply source 61 to the adsorption tower 12.

The temperature adjustment unit 31 is not particularly limited, and for example, a known heater such as an electric heater which is an electric heating device is used, and specific examples thereof include a jacket-type heater that covers the outer peripheral portion of the introduction line 13.

The temperature adjustment unit 31 adjusts the temperature of the raw material gas introduced into the adsorption tower 12 by heating the raw material gas flowing through the introduction line 13. Thus, for example, the raw material gas having reference temperature $T_A$ (for example, 25°C) is heated to reach changed temperature $T_B$ ($T_A < T_B$).

At this time, the temperature of the adsorbent in the adsorption tower 12 is also initially the reference temperature $T_A$, but when the raw material gas having reached the changed temperature $T_B$ is introduced into the adsorption tower 12 and adsorbed and desorbed by the adsorbent, the adsorbent having the reference temperature $T_A$ is also heated and gradually reaches the changed temperature $T_B$.

In this way, by adjusting the temperature of the raw material gas introduced into the adsorption tower 12, the temperature of the adsorbent filled in the adsorption tower 12 is indirectly adjusted.

Note that the temperature adjustment unit 31 is not limited to the above-described example.

For example, when the adsorption tower 12 is small, a jacket-type heater may be provided as the temperature adjustment unit 31 on the outer peripheral portion of the adsorption tower 12. In this case, the adsorbent filled in the adsorption tower 12 is heated from the outer peripheral portion of the adsorption tower 12. However, in this case, when the inner diameter of the adsorption tower 12 is large, heat transfer failure is likely to occur, and it may be difficult to uniformly heat the adsorbent up to the central portion of the adsorption tower 12.

On the other hand, according to the above-described example (example of indirectly adjusting the temperature of the adsorbent by adjusting the temperature of the raw material gas), since the raw material gas is also introduced into the central portion of the adsorption tower 12, it is easy to uniformly heat the adsorbent up to the central portion of the adsorption tower 12.

As will be described later, the equilibrium adsorption amount of the adsorbent may significantly change even with a small temperature change of about 15°C (see FIGS. 2 to 4). Therefore, the adsorbent is preferably uniformly heated.

A control unit 35 is connected to the temperature adjustment unit 31. The control unit 35 is, for example, a commercially available personal computer (PC).

Under the control of the control unit 35, the temperature adjustment unit 31 is driven and raises temperature to a desired temperature. In this way, the raw material gas flowing through the introduction line 13 is heated to a desired temperature.

<Adsorption isotherm>

FIGS. 2, 3, and 4 are graphs showing an example of adsorption isotherms of $CO_2$, CO, and $N_2$ measured by changing the temperature, respectively.

The adsorption isotherms in FIGS. 2 to 4 are adsorption isotherms measured using 13X zeolite as an adsorbent (adsorption isotherms when each gas component is adsorbed to and desorbed from 13X zeolite).

In FIGS. 2 to 4, temperature T at the time of measuring the adsorption isotherm is changed by 15°C in a range of 10 to 70°C. The adsorption isotherm is the relationship between pressure and equilibrium adsorption amount Q, and the horizontal axis represents pressure (partial pressure) and the vertical axis represents equilibrium adsorption amount.

Comparing FIGS. 2, 3, and 4, the adsorption amount of $CO_2$ is larger than the adsorption amounts of CO and $N_2$ by about one order of magnitude.

Since $CO_2$ with stronger adsorption affinity is rapidly adsorbed inside pores of the adsorbent at low pressure, the adsorption isotherm is nonlinear with a steep slope at low pressure. $CO_2$ is hardly desorbed at high pressure, and rapidly desorbed when the pressure is reduced to low pressure.

On the other hand, the adsorption isotherms of $N_2$ and CO with weaker adsorption affinity are linear in a pressure range wider than that of $CO_2$. $N_2$ and CO desorb in the process of changing from high pressure to low pressure.

The adsorption isotherm is a graph showing the correlation between pressure P and equilibrium adsorption amount Q at the constant temperature T. As shown in FIGS. 2 to 4, the equilibrium adsorption amount Q decreases as the temperature T increases. Effective adsorption amount $\Delta Q$ corresponding to the same pressure swing range changes similarly, and the effective adsorption amount $\Delta Q$ decreases as the temperature T increases.

Hereinafter, for convenience, a case where the gas component 1 is carbon dioxide ($CO_2$) and the gas component 2 is nitrogen ($N_2$) will be described as an example.

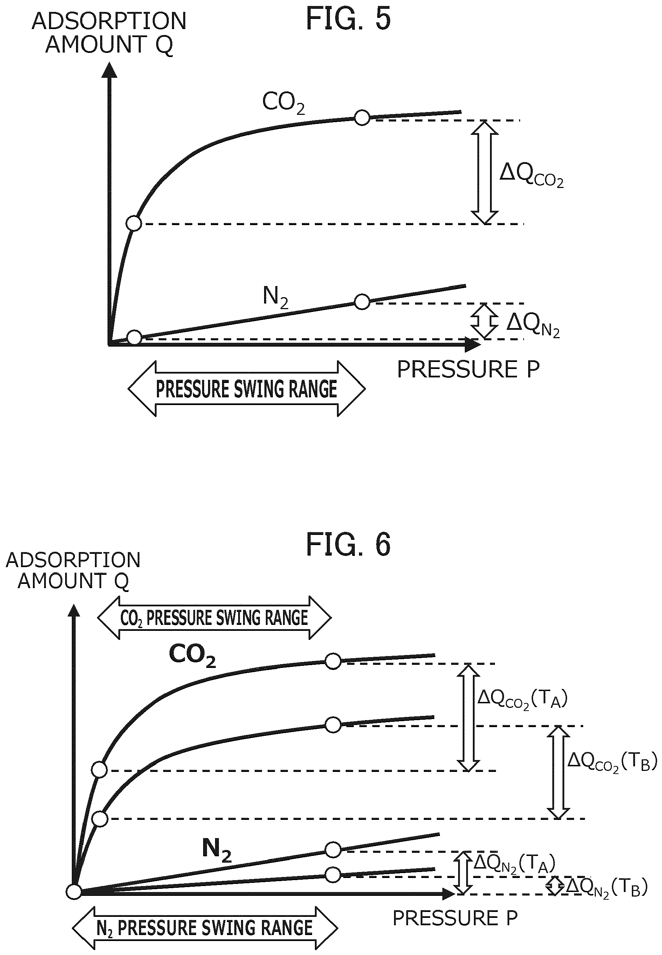

FIG. 5 is a graph showing an example of adsorption isotherms of the gas component 1 ($CO_2$) and the gas component 2 (N2) .

In the pressure swing adsorption (PSA) method, a phenomenon in which the equilibrium adsorption amount Q with respect to the adsorbent changes depending on pressure swing is used. A change in the equilibrium adsorption amount Q (also simply referred to as "adsorption amount Q") is called effective adsorption amount $\Delta Q$. As shown in FIG. 5, even with the same pressure swing range, the gas components have different effective adsorption amounts $\Delta Q_i$ (i = 1, 2) .

An adsorbent having effective adsorption amount of the gas component 1 ($CO_2$) $\Delta Q_1(\Delta Q_{CO2})$ larger than effective adsorption amount of the gas component 2 ($N_2$) $\Delta Q_2(\Delta Q_{N2})$ is used. Thereby, the gas component 1 ($CO_2$) can be separated using the PSA method.

The adsorbent is not limited to 13X zeolite as long as it exhibits an adsorption isotherm having the same shape as described above, and for example, other adsorbents such as ZSM-5 can also be used.

<Gas separation by PSA method>

A method for separating and recovering the gas component 1 from the raw material gas containing at least the gas component 1 and the gas component 2 by the pressure swing adsorption (PSA) method in the gas separation facility 11 shown in FIG. 1 will be described.

First, the on-off valve 21 of the introduction line 13 is opened, and the raw material gas is introduced from the raw material gas supply source 61 into the adsorption tower 12 via the introduction line 13. Thereafter, the on-off valve 21 is closed.

As a result, the raw material gas is adsorbed to the adsorbent filled in the adsorption tower 12.

More specifically, as shown in FIG. 1, the gas component 1 with stronger adsorption affinity is adsorbed in a region close to an inlet port of the adsorption tower 12 (a connection portion between the introduction line 13 and the adsorption tower 12). On the other hand, the gas component 2 with weaker adsorption affinity is adsorbed in a region far from the inlet port of the adsorption tower 12.

At this time, the on-off valve 23 of the desorbed gas outlet line 15 is closed, and the on-off valve 22 of the off-gas outlet line 14 is opened. As a result, the raw material gas (off-gas) not adsorbed to the adsorbent is discharged via the off-gas outlet line 14.

As shown in FIG. 1, the temperature measurement unit 26a and the temperature measurement unit 26b may be provided in a region where the gas component 1 is adsorbed and a region where the gas component 2 is adsorbed, respectively.

As shown in FIG. 1, in a state where distribution of the raw material gases (the gas component 1 and the gas component 2) is generated inside the adsorption tower 12, the on-off valve 22 of the off-gas outlet line 14 and the on-off valve 25 of the branch line 17 are closed, and the on-off valve 23 of the desorbed gas outlet line 15 and the on-off valve 24 of the branch line 16 are opened.

Then, the vacuum pump 18 is driven to start evacuating the inside of the adsorption tower 12.

As a result, first, the impurity gas containing the gas component 2 with weaker adsorption affinity (for convenience, also simply referred to as "gas component 2") is desorbed from the adsorbent, and is discharged via the desorbed gas outlet line 15 and the branch line 16 (first time period).

At this time, the gas component 2 is desorbed from the adsorbent without passing through the region where the gas component 1 is adsorbed. Therefore, the gas component 1 is prevented from being partially desorbed from the adsorbent and being discharged.

Next, the on-off valve 24 of the branch line 16 is closed, and the on-off valve 25 of the branch line 17 is opened. Then, the vacuum pump 18 is driven to evacuate the inside of the adsorption tower 12.

As a result, the recovered gas containing the gas component 1 with stronger adsorption affinity (for convenience, also simply referred to as "gas component 1") is desorbed from the adsorbent, and is discharged via the desorbed gas outlet line 15 and the branch line 17 (second time period). In the second time period, the inside of the adsorption tower 12 may be further evacuated than in the first time period. Thus, the gas component 1 is separated and recovered.

As described above, in the gas separation facility 11, the gas component 1 and the gas component 2 can be recovered from different branch lines in the divided time periods.

In the adsorption tower 12, so-called rinsing using part of the desorbed gas of another adsorption tower as a rinsing gas may be performed.

Specifically, for example, part of the high-purity gas component 1 ($CO_2$) desorbed from one adsorption tower 12a may be used for purging the gas component 2 ($N_2$) from another adsorption tower 12b.

As described with reference to FIGS. 2 to 4, as the temperature T increases, the equilibrium adsorption amount Q decreases, and the effective adsorption amount ΔQ corresponding to the same pressure swing range similarly decreases.

Therefore, the temperature adjustment unit 31 is driven to bring the temperature of the adsorbent filled in the adsorption tower 12 from the reference temperature $T_A$ (for example, 25°C) to the changed temperature $T_B$ (for example, 70°C) higher than the reference temperature $T_A$. As a result, the gas component 2 is more easily desorbed from the adsorbent in the first time period. Alternatively, before the first time period, the gas component 2 is not adsorbed to the adsorbent but is easily discharged as the off-gas.

However, when the temperature of the adsorbent is excessively increased, the effective adsorption amount of the gas component 1 excessively decreases. In that case, the gas component 1 is also easily desorbed in the first time period (alternatively, the exhaust gas is easily discharged as the off-gas before the first time period), which is not preferable.

Therefore, target temperature is set, and the temperature of the adsorbent is adjusted to be this target temperature.

The target temperature is a temperature determined by comparing temperature-related change ratios of the effective adsorption amounts of the gas component 1 and the gas component 2 to the adsorbent.

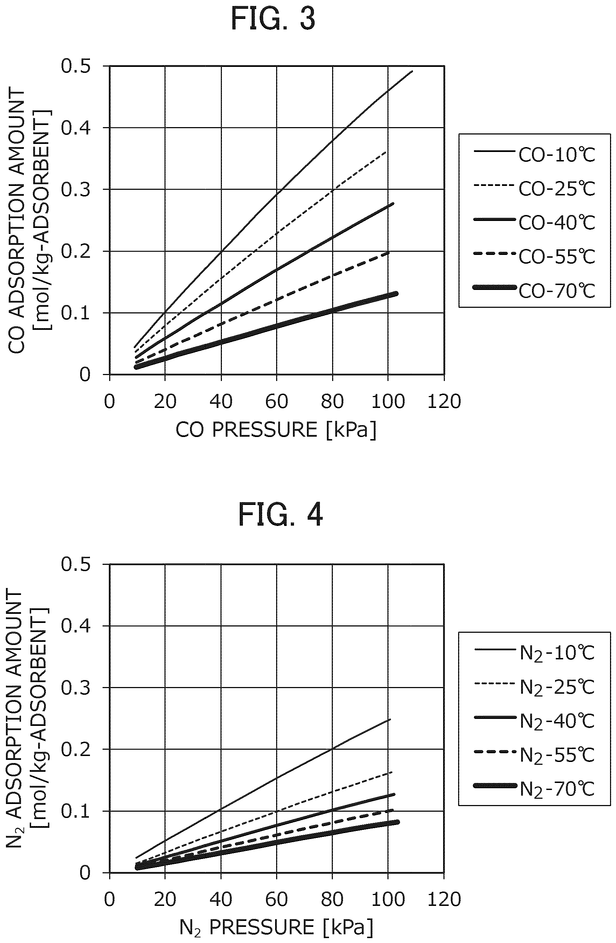

The adsorption isotherm of $N_2$ has slope decreasing with increasing temperature over a wide pressure range (see FIG. 4). That is, the effective adsorption amount of $N_2$ $ΔQ_{N2}$ is likely to decrease when the temperature is increased, and has large temperature dependence (large temperature-related change ratio). The same applies to the effective adsorption amount of CO $ΔQ_{CO}$ (see FIG. 3).

On the other hand, in the adsorption isotherm of $CO_2$, as the temperature increases, a change in slope is small at high pressure (shifts downward substantially in parallel), but the slope significantly decreases at low pressure (for example, less than 10 kPa) (see FIG. 2).

However, since the operation efficiency of the vacuum pump 18 is poor in evacuating the inside of the adsorption tower 12 to a vacuum state, desorption is generally performed at high pressure (for example, 10 kPa or more). In this case, even when the temperature increases, the decrease in the slope of the adsorption isotherm is small.

That is, the effective adsorption amount of $CO_2$ $ΔQ_{CO2}$ is unlikely to decrease even when the temperature is increased, and has small temperature dependence (small temperature-related change ratio).

In consideration of such a difference in the effective adsorption amount ΔQ, for example, the target temperature is set to a temperature at which the temperature-related change ratio of the effective adsorption amount of the gas component 1 ($CO_2$) $ΔQ_1(ΔQ_{CO2})$ is smaller than the temperature-related change ratio of the effective adsorption amount of the gas component 2 ($N_2$) $\Delta Q_2 (\Delta Q_{N2})$.

As a result, in a state where the relationship of $\Delta Q_1 > \Delta Q_2$ is maintained, the difference therebetween becomes larger, and the gas component 1 is more easily separated using the PSA method.

Specifically, for example, the target temperature is determined according to the following steps 1 to 3.

Step 1: For the gas component 1 and the gas component 2, effective adsorption amount $\Delta Q_i(T)$, which is a change in an equilibrium adsorption amount corresponding to a pressure swing range, is calculated from an adsorption isotherm of gas component i (i = 1, 2) at temperature T. The adsorption pressure (partial pressure) and the desorption pressure (partial pressure) of the gas component i at the temperature T are also appropriately referred to.

The pressure swing range is appropriately determined for each gas component i, and may be the same or different for each gas component i.

Step 2: For the gas component 1 and the gas component 2, a temperature-related change ratio of effective adsorption amount $\Delta Q_i(T)$ between reference temperature $T_A$ and changed temperature $T_B$ changed from the reference temperature $T_A$, $X_i(T_A,T_B) = 1 - \{\Delta Q_i(T_B)/\Delta Q_i(T_A)\}$, where $T_A < T_B$, is calculated.

The reference temperature $T_A$ is not particularly limited, and is, for example, any temperature selected from the range of normal temperature (5 to 35°C).

Step 3: The temperature-related change ratios of the effective adsorption amounts $X_i(T_A,T_B)$ of the gas component 1 and the gas component 2 are compared to each other, and the changed temperature $T_B$ satisfying the following formula (1), where $0 < \alpha \leq 1$, is determined as a target temperature, $\alpha$ is specifically, for example, 0.5.

$$X_1(T_A, T_B) \ < \ \alpha \ \times \ X_2(T_A, T_B) \ \ \dots \ \ (1)$$

FIG. 6 is a graph showing an example of adsorption isotherms of the gas component 1 ($CO_2$) and the gas component 2 ($N_2$) when the temperature is changed from the reference temperature $T_A$ to the changed temperature $T_B$.

In FIG. 6, since $\Delta Q_{CO2}(T_A): \Delta Q_{CO2}(T_B)= 1: 0.9$ and $\Delta Q_{N2}(T_A): \Delta Q_{N2}(T_B) = 1: 0.5$, the above formula (1) is satisfied by the following calculation.

$$X_{CO2}(T_A, T_B) \ = \ 1 \ - \ \{\Delta Q_{CO2}(T_B)/\Delta Q_{CO2}(T_A)\} \ = \ 0.1$$

$$X_{N2}(T_A, T_B) \ = \ 1 \ - \ \{\Delta Q_{N2}(T_B)/\Delta Q_{N2}(T_A)\} \ = \ 0.5$$

$$X_{CO2}(T_A, T_B) \ < \ \alpha \ \times \ X_{N2}(T_A, T_B)$$

When the raw material gas contains other gas components (gas component 3, gas component 4, and the like) in addition to the gas component 1 and the gas component 2, the target temperature is determined so as to also satisfy each of $X_1(T_A,T_B) < \alpha \times X_3(T_A,T_B)$, $X_1(T_A,T_B) < \alpha \times X_4(T_A,T_B)$, and the like.

In other words, the other gas component is regarded as another gas component 2, and the target temperature is determined so as to satisfy the above formula (1) also for this another gas component 2.

The changed temperature $T_B$ (target temperature) is appropriately set depending on the types of the adsorbent and the gas species within a range satisfying $T_A < T_B$.

On the other hand, when $T_B$ is too high, for example, the effective adsorption amount of the gas component 1 ($CO_2$) $\Delta Q_1 (\Delta Q_{CO2})$ excessively decreases, and the required amount of the adsorbent to be filled increases, and as a result, the adsorption tower 12 may be enlarged. From the viewpoint of avoiding this situation, for example, when 13X zeolite is used as the adsorbent, $T_B$ is preferably 100°C or lower.

The temperature change amount of the effective adsorption amount $\Delta Q$ varies depending on the type of the adsorbent. Therefore, the upper limit of the changed temperature $T_B$ is appropriately set in consideration of, for example, the type of the adsorbent, the cost of the adsorbent, the size restriction of the adsorption tower, and the like.

The subject for determining such a target temperature is not particularly limited.

For example, the control unit 35 may execute calculation and determine the target temperature automatically based on a program or the like, or in response to an operation by an operator of the gas separation facility 11.

In addition, an operator of the gas separation facility 11 may determine the target temperature using another electronic computer and input the determined target temperature to the control unit 35.

Then, the control unit 35 drives and controls the temperature adjustment unit 31 on the basis of the determined target temperature.

Here, one cycle is a process in which the raw material gas is adsorbed to the adsorbent and then desorbed.

More specifically, one cycle includes introduction of the raw material gas into the adsorption tower 12, closing of the on-off valve 21, and thereafter, discharging of the raw material gas (desorbed gas) from the adsorption tower 12 via the desorbed gas outlet line 15.

When the introduction (adsorption) of the raw material gas is started, the temperature of the adsorbent filled in the adsorption tower 12 may change as compared with the temperature before the start. Therefore, after at least 5 cycles, the temperature of the adsorbent is measured using the temperature measurement unit 26. As a result, the temperature of the adsorbent is stabilized, and accurate temperature can be measured. Thereafter, the temperature adjustment unit 31 is controlled to adjust the temperature of the adsorbent to the target temperature.

Even when the number of cycles reaches a certain number or more, the temperature of the adsorbent may slightly fluctuate due to the effect of adsorption heat and desorption heat of the raw material gas.

Generally, since the adsorption heat is exothermic and the desorption heat is endothermic, and the temperature of the adsorbent is the highest after completion of the adsorption step and is the lowest after completion of the desorption step.

The purity of the gas component 1 in the desorbed gas is largely affected by desorption behavior of the raw material gas at an initial stage of the desorption step in which a large amount of the gas component 2 is desorbed (i.e., immediately after completion of the adsorption step).

That is, for example, in order to obtain a recovered gas having high purity of the gas component 1 in the second time period described above, it is preferable to appropriately adjust the temperature of the adsorbent in the first time period (including the initial stage of the desorption step, i.e., immediately after completion of the adsorption step) described above to desorb a large amount of the gas component 2.

Therefore, as the temperature measured by the temperature measurement unit 26, it is preferable to use the temperature immediately after completion of the adsorption step when the temperature of the adsorbent is the highest, i.e., the maximum value of the temperature amplitude measured by the temperature measurement unit.

[Second Embodiment]

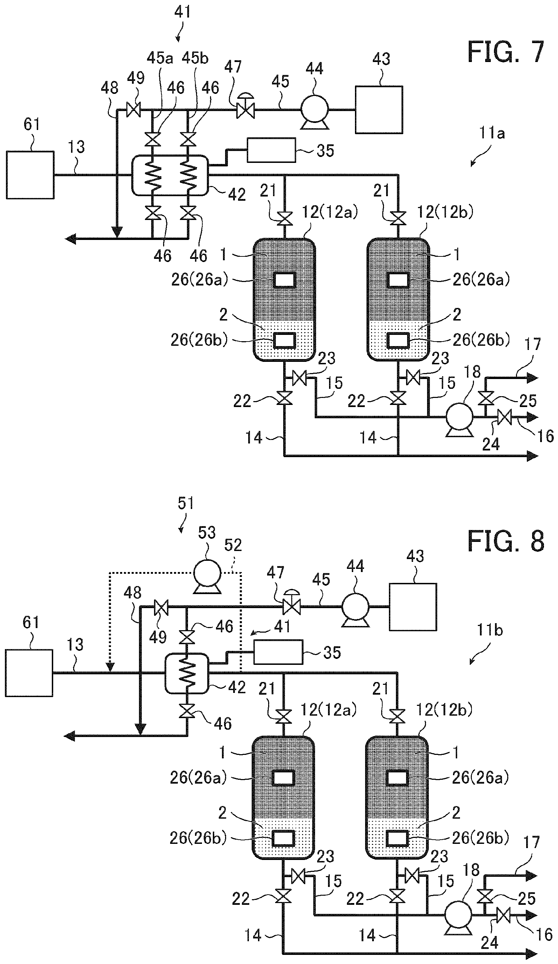

FIG. 7 is a schematic diagram showing a gas separation facility 11a of a second embodiment.

The same parts as those in the first embodiment are denoted by the same reference numerals, and description thereof will be omitted.

A temperature adjustment unit 41 of the gas separation facility 11a includes a heat exchanger 42 disposed in the middle of the introduction line 13 through which the raw material gas flows.

The heat exchanger 42 is connected to a heat medium source 43 via a heat medium line 45. The heat medium line 45 is provided with a pump 44 and a plurality of on-off valves 46. By opening the on-off valves 46 and driving the pump 44, a heat medium (not illustrated) flows from the heat medium source 43 to the heat exchanger 42 via the heat medium line 45.

In this way, the temperature of the raw material gas flowing through the introduction line 13 is adjusted through heat exchange in the heat exchanger 42.

Examples of the heat medium include a liquid heat medium such as warm wastewater, a gaseous heat medium such as exhaust gas, and the like, and the heat medium is appropriately selected according to the specification of the heat exchanger 42 and the like. As described later, a low temperature heat medium can also be used. The temperatures of the heat medium and the raw material gas are appropriately measured by a thermocouple (not illustrated) or the like disposed in the heat exchanger 42.

As described below, the heat exchanger 42 can variably control at least one of a flow rate of the heat medium and a heat transfer area.

First, as shown in FIG. 7, a flow rate control valve 47 is provided upstream of the heat exchanger 42 on the heat medium line 45. The flow rate control valve 47 can variably control the flow rate of the heat medium flowing through the heat exchanger 42.

Also, as shown in FIG. 7, a bypass 48 that does not pass through the heat exchanger 42 is connected to the heat medium line 45 via an on-off valve 49. By opening the on-off valve 49, part of the heat medium flowing through the heat medium line 45 can flow, bypassing the heat exchanger 42.

As a result, for example, even when it is difficult to control the flow rate of the heat medium by the flow rate control valve 47, the flow rate of the heat medium flowing into the heat exchanger 42 can be variably controlled.

Furthermore, the heat medium line 45 passing through the heat exchanger 42 is divided into a plurality of lines, and in FIG. 7, as an example, a heat medium line 45a and a heat medium line 45b are illustrated.

By opening and closing the on-off valves 46, a state in which the heat medium flows only in the heat medium line 45a or the heat medium line 45b, a state in which the heat medium flows in both the heat medium line 45a and the heat medium line 45b, or the like can be appropriately selected.

In this way, in the heat exchanger 42, a surface that transfers heat to the raw material gas flowing through the introduction line 13 (heat transfer surface) is divided, and this area (heat transfer area) can be variably controlled.

As described above, for example, an electric heating device such as an electric heater can be considered as the temperature adjustment unit 31 (see FIG. 1) in the first embodiment.

However, since the temperature change of the adsorption isotherm of $CO_2$, $N_2$, or the like is a phenomenon that occurs at low temperature of about 100°C or lower (see FIGS. 2 to 4), it can be said that it is inefficient to use an electric heating device having low efficiency in energy conversion from electricity.

When the temperature is about 100°C or lower, for example, warm wastewater generated in a factory or the like can be used as the heat medium, and the raw material gas (eventually, the adsorbent) can be heated by the low temperature exhaust heat.

Therefore, in the second embodiment, the heat exchanger 42 capable of adjusting the temperature of the raw material gas using the heat medium is used. As a result, unused exhaust heat and the like can be effectively used, and economic efficiency is high.

In a normal heat exchanger, since the flow rate of the heat medium and the heat transfer area are designed to be constant, it is difficult to control the temperature of the raw material gas.

Therefore, in the second embodiment, the heat exchanger 42 capable of controlling at least one of the flow rate of the heat medium and the heat transfer area is used. Thus, for example, even when the temperature of the heat medium is not constant, the temperature of the raw material gas can be adjusted.

[Third Embodiment]

FIG. 8 is a schematic diagram showing a gas separation facility 11b of a third embodiment.

The same parts as those in the first to second embodiments are denoted by the same reference numerals, and description thereof will be omitted.

The gas separation facility 11b includes a gas circulation unit 51 around the temperature adjustment unit 41.

The gas circulation unit 51 has a circulation line 52 connected from an outlet side to an inlet side of the heat exchanger 42 in the introduction line 13. A pump 53 is disposed in the middle of the circulation line 52. By driving the pump 53, part of the raw material gas on the outlet side of the heat exchanger 42 is circulated to the inlet side of the heat exchanger 42.

For example, there may be a case where it is difficult to variably control the heat transfer area of the heat exchanger 42 (see FIG. 7) in terms of design. In that case, by repeating such circulation, the raw material gas repeatedly flows through the heat exchanger 42, and thus, an effect equivalent to the effect of increasing the heat transfer area of the heat exchanger 42 can be obtained.

EXAMPLES

Hereinafter, the present invention will be specifically described with reference to Examples. However, the present invention is not limited to Examples described below.

<Gas separation facility>

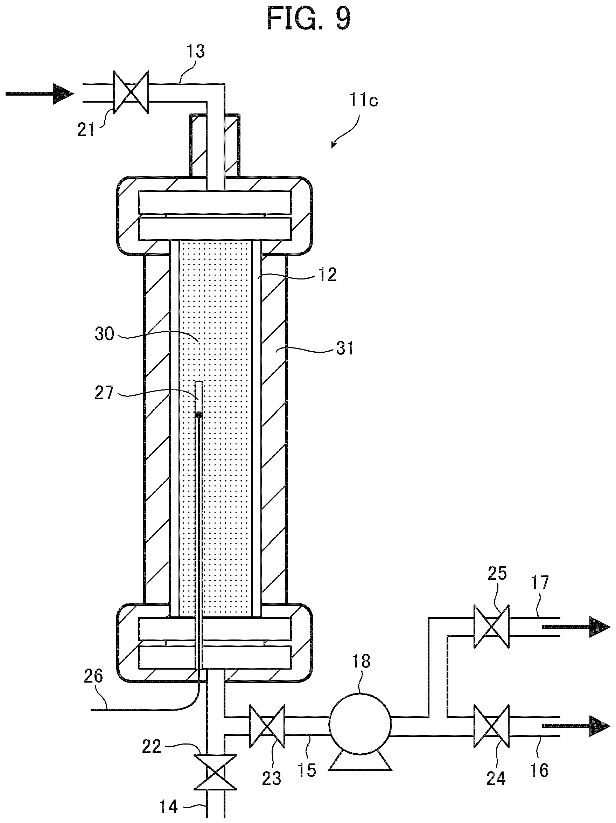

First, a gas separation facility 11c used in Examples 1 to 2 and Comparative Example 1 to be described below is described with reference to FIG. 9.

FIG. 9 is a schematic diagram showing the gas separation facility 11c used in Examples 1 to 2 and Comparative Example 1. The same parts as those in the first to third embodiments described with reference to FIGS. 1, 7, and 8 are denoted by the same reference numerals, and description thereof will be omitted.

As shown in FIG. 9, the temperature adjustment unit 31 which is an electric heater is provided on the outer peripheral portion of the introduction line 13 and the adsorption tower 12 disposed on the inlet side of the adsorption tower 12, and the temperature of the raw material gas flowing through the introduction line 13 and the temperature of the adsorbent 30 can be controlled by the temperature adjustment unit 31.

The temperature measurement unit 26 is a thermocouple. The adsorption tower 12 is provided with a sheath tube 27 that reaches the inside of the adsorption tower 12, and the temperature of the adsorbent 30 filled in the adsorption tower 12 can be measured by inserting the temperature measurement unit 26 (thermocouple) into the sheath tube 27.

<Example 1>

A mixed gas of four components, 22 vol% of $CO_2$, 24 vol% of CO, 49 vol% of $N_2$, and 5 vol% of $H_2$ simulating blast furnace gas discharged from ironworks was prepared using a cylinder gas and a mass flow controller (both not shown), and used as a raw material gas.

As the small adsorption tower 12, an SUS column with an inner diameter of 40 mm and a body length of 250 mm was used. The inside of the adsorption tower 12 was filled with 190 g of 13X zeolite ($\varphi$ 1.5 mm pellet) as the adsorbent 30.

The temperature of the adsorbent 30 was heated from the reference temperature $T_A$ (25°C) to the changed temperature $T_B$ (90°C) as a target temperature by driving the temperature adjustment unit 31 (electric heater). This target temperature is determined in advance according to the above-described steps 1 to 3, and satisfies the above-described formula (1).

The temperature of the adsorbent 30 was determined using the temperature measurement unit 26 (thermocouple) inserted into the sheath tube 27. More specifically, it was obtained from the maximum value of the obtained temperature amplitude data.

In this state, the raw material gas was introduced into the adsorption tower 12 from the introduction line 13 under conditions of a flow rate of 5.4 NL/min and a pressure of 151 kPa, and adsorbed to the adsorbent 30. Part of the raw material gas was discharged as an off-gas from the off-gas outlet line 14 without being adsorbed to the adsorbent 30.

Thereafter, the inside of the adsorption tower 12 was evacuated to a pressure of 6 kPa using the vacuum pump 18 to desorb the raw material gas adsorbed on the adsorbent 30. The total time of the adsorption step and the desorption step per cycle was set to 200 seconds (adsorption step: 100 seconds, desorption step: 100 seconds).

In this way, the raw material gas desorbed from the adsorbent 30 (desorbed gas) was recovered as a recovered gas. The $CO_2$ concentration of the recovered gas was measured using a gas analyzer (not shown).

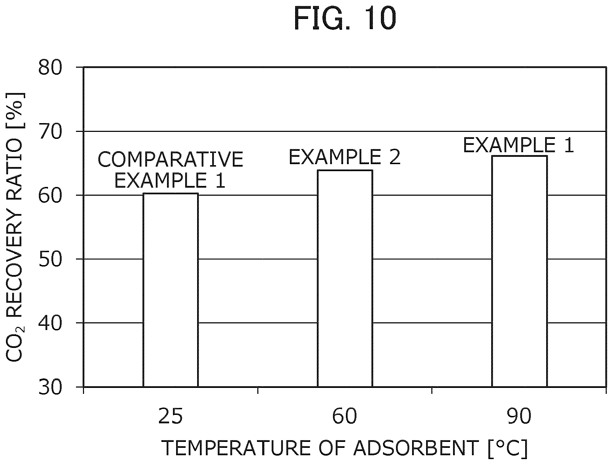

The $CO_2$ recovery ratio was determined based on the $CO_2$ concentration of the recovered gas and the $CO_2$ concentration of the raw material gas. The results are shown in the graph of FIG. 10.

By controlling an on-off valve 25 and an on-off valve 24, the ratio between flowing time $t_1$ of the recovered gas passing through the branch line 17 and flowing time $t_2$ of the impurity gas passing through the branch line 16 (gas flowing time ratio $t_1/t_2$) was changed. Thus, the $CO_2$ concentration of the finally obtained gas was adjusted to 90 vol% using the gas analyzer (not shown).

<Example 2>

The target temperature was set to 60°C. This target temperature is determined in advance according to the above-described steps 1 to 3, and satisfies the above-described formula (1).

Except for the foregoing, the recovered gas was recovered in the same manner as in Example 1, and the $CO_2$ recovery ratio was determined. The results are shown in the graph of FIG. 10.

<Comparative Example 1>

The temperature adjustment unit 31 (electric heater) was not driven. That is, the temperature of the adsorbent 30 was maintained at the reference temperature $T_A$ (25°C).

Except for the foregoing, the recovered gas was recovered in the same manner as in Example 1, and the $CO_2$ recovery ratio was determined. The results are shown in the graph of FIG. 10.

<Summary of evaluation results>

FIG. 10 is a graph showing $CO_2$ recovery ratios of Examples 1 to 2 and Comparative Example 1.

As shown in the graph of FIG. 10, in Examples 1 to 2 in which the temperature of the adsorbent was adjusted to the target temperature (90°C or 60°C), the $CO_2$ recovery ratio was higher than that in Comparative Example 1 in which the temperature of the adsorbent was not adjusted to the target temperature, and $CO_2$ could be efficiently separated from the raw material gas.

DESCRIPTION OF SYMBOLS

| | |
|---|---|
| 1 | Gas component 1 |
| 2 | Gas component 2 |
| 11, 11a, 11b | Gas separation facility |
| 12, 12a, 12b | Adsorption tower |
| 13 | Introduction line (introduction unit) |
| 14 | Off-gas outlet line |
| 15 | Desorbed gas outlet line (evacuation unit) |

| | |
|---|---|
| 16 | Branch line (evacuation unit) |
| 17 | Branch line (evacuation unit) |
| 18 | Vacuum pump (evacuation unit) |
| 21, 22, 23, 24, 25 | On-off valve |
| 26, 26a, 26b | Temperature measurement unit |
| 27 | Sheath tube |
| 30 | Adsorbent |
| 31 | Temperature adjustment unit |
| 35 | Control unit |
| 41 | Temperature adjustment unit |
| 42 | Heat exchanger |
| 43 | Heat medium source |
| 44 | Pump |
| 45, 45a, 45b | Heat medium line |
| 46 | On-off valve |
| 47 | Flow rate control valve |
| 48 | Bypass |
| 49 | On-off valve |
| 51 | Gas circulation unit |
| 52 | Circulation line |
| 53 | Pump |
| 61 | Raw material gas supply source |

**Claims**

1. A gas separation facility that separates and recovers a gas component 1 from a raw material gas containing at least the gas component 1 and a gas component 2 by a pressure swing adsorption method, the gas separation facility comprising:

   an adsorption tower filled with an adsorbent that adsorbs and desorbs the gas component 1 and the gas component 2;
   an introduction unit that introduces the raw material gas into the adsorption tower for adsorption of the raw material gas to the adsorbent;
   an evacuation unit that evacuates the adsorption tower for desorption of the raw material gas that is adsorbed on the adsorbent;
   a temperature measurement unit that measures temperature of the adsorbent;
   a temperature adjustment unit that adjusts temperature of the adsorbent; and
   a control unit that controls the temperature adjustment unit such that temperature of the adsorbent becomes target temperature,
   wherein the target temperature is temperature determined by comparing temperature-related change ratios of effective adsorption amounts of the gas component 1 and the gas component 2 to the adsorbent.

2. The gas separation facility according to claim 1, wherein the target temperature is a temperature at which the temperature-related change ratio of an effective adsorption amount of the gas component 1 to the adsorbent is smaller than the temperature-related change ratio of an effective adsorption amount of the gas component 2 to the adsorbent.

3. The gas separation facility according to claim 1 or 2, wherein the control unit determines the target temperature according to the following steps 1 to 3:

   step 1: for the gas component 1 and the gas component 2, effective adsorption amount $\Delta Q_i(T)$, which is a change in an equilibrium adsorption amount corresponding to a pressure swing range, is calculated from an adsorption isotherm of gas component i (i = 1, 2) at temperature T;
   step 2: for the gas component 1 and the gas component 2, a temperature-related change ratio of effective adsorption amount $\Delta Q_i(T)$ between reference temperature $T_A$ and changed temperature $T_B$ changed from the reference temperature $T_A$, $X_i(T_A, T_B) = 1 - \{\Delta Q_i(T_B)/\Delta Q_i(T_A)\}$, where $T_A < T_B$, is calculated; and
   step 3: temperature-related change ratios of the effective adsorption amounts $X_i(T_A, T_B)$ of the gas component 1 and the gas component 2 are compared, and changed temperature $T_B$ satisfying the following formula (1), where $0 < \alpha \leq 1$, is determined as a target temperature,

$$X_1(T_A, T_B) \; < \; \alpha \; \times \; X_2(T_A, T_B) \; \ldots \; (1).$$

4. The gas separation facility according to any one of claims 1 to 3,

   wherein the evacuation unit includes an outlet line that discharges the raw material gas desorbed from the adsorbent, and
   the outlet line is branched into a branch line from which the gas component 1 is discharged and a branch line from which the gas component 2 is discharged.

5. The gas separation facility according to any one of claims 1 to 4, wherein the temperature adjustment unit indirectly adjusts temperature of the adsorbent by adjusting temperature of the raw material gas.

6. The gas separation facility according to claim 5,

   wherein the temperature adjustment unit
   includes a heat exchanger capable of variably controlling at least one of a flow rate of heat medium and a heat transfer area, and
   indirectly adjusts temperature of the adsorbent by adjusting temperature of the raw material gas using the heat exchanger.

7. The gas separation facility according to claim 6, comprising a gas circulation unit that circulates part of the raw material gas on an outlet side of the heat exchanger to an inlet side of the heat exchanger.

8. A gas separation method for separating and recovering a gas component 1 from a raw material gas containing at least the gas component 1 and a gas component 2 by a pressure swing adsorption method, the gas separation method comprising:

   introducing the raw material gas into an adsorption tower filled with an adsorbent that adsorbs and desorbs the gas component 1 and the gas component 2 to adsorb the raw material gas to the adsorbent;
   desorbing the raw material gas that is adsorbed on the adsorbent by evacuating the adsorption tower,
   measuring a temperature of the adsorbent using a temperature measurement unit that measures temperature of the adsorbent; and
   controlling a temperature adjustment unit that adjusts temperature of the adsorbent such that temperature of the adsorbent becomes a target temperature,
   wherein the target temperature is temperature determined by comparing temperature-related change ratios of effective adsorption amounts of the gas component 1 and the gas component 2 to the adsorbent.

9. The gas separation method according to claim 8, wherein the target temperature is temperature at which the temperature-related change ratio of an effective adsorption amount of the gas component 1 to the adsorbent is smaller than the temperature-related change ratio of an effective adsorption amount of the gas component 2 to the adsorbent.

10. The gas separation method according to claim 8 or 9, wherein the target temperature is determined according to the following steps 1 to 3:

    step 1: for the gas component 1 and the gas component 2, effective adsorption amount $\Delta Q_i(T)$, which is a change in an equilibrium adsorption amount corresponding to a pressure swing range, is calculated from an adsorption isotherm of gas component i (i = 1, 2) at temperature T;
    step 2: for the gas component 1 and the gas component 2, a temperature-related change ratio of effective adsorption amount $\Delta Q_i(T)$ between reference temperature $T_A$ and changed temperature $T_B$ changed from the reference temperature $T_A$, $X_i(T_A, T_B) = 1 - \{\Delta Q_i(T_B)/\Delta Q_i(T_A)\}$, where $T_A < T_B$, is calculated; and
    step 3: temperature-related change ratios of the effective adsorption amounts $X_i(T_A, T_B)$ of the gas component 1 and the gas component 2 are compared, and changed temperature $T_B$ satisfying the following formula (1), where $0 < \alpha \leq 1$, is determined as a target temperature,

$$X_1(T_A, T_B) < \alpha \times X_2(T_A, T_B) \quad \ldots \quad (1).$$

**11.** The gas separation method according to any one of claims 8 to 10,

wherein the gas component 1 and the gas component 2 are adsorbed to the adsorbent, and
the gas component 1 and the gas component 2 that are adsorbed on the adsorbent are desorbed in divided time periods.

**12.** The gas separation method according to any one of claims 8 to 11, comprising:

having a process from adsorption to desorption of the raw material gas to and from the adsorbent as one cycle, after at least 5 cycles, measuring temperature of the adsorbent using the temperature measurement unit, and controlling the temperature adjustment unit to adjust temperature of the adsorbent to a target temperature.

**13.** The gas separation method according to any one of claims 8 to 12, wherein a maximum value of a temperature amplitude measured by the temperature measurement unit is used as temperature of the adsorbent.

**14.** The gas separation method according to any one of claims 8 to 13, wherein the temperature adjustment unit indirectly adjusts temperature of the adsorbent by adjusting temperature of the raw material gas.

**15.** The gas separation method according to claim 14,

wherein the temperature adjustment unit
includes a heat exchanger capable of variably controlling at least one of a flow rate of heat medium and a heat transfer area, and
indirectly adjusts temperature of the adsorbent by adjusting temperature of the raw material gas using the heat exchanger.

**16.** The gas separation method according to claim 15, comprising circulating part of the raw material gas on an outlet side of the heat exchanger to an inlet side of the heat exchanger.

# FIG. 1

# FIG. 2

## FIG. 3

## FIG. 4

# FIG. 5

ADSORPTION
AMOUNT Q

$CO_2$

$\Delta Q_{CO_2}$

$N_2$

$\Delta Q_{N_2}$

PRESSURE P

PRESSURE SWING RANGE

# FIG. 6

ADSORPTION
AMOUNT Q

$CO_2$ PRESSURE SWING RANGE

**$CO_2$**

$\Delta Q_{CO_2}(T_A)$

$\Delta Q_{CO_2}(T_B)$

**$N_2$**

$\Delta Q_{N_2}(T_A)$

$\Delta Q_{N_2}(T_B)$

PRESSURE P

$N_2$ PRESSURE SWING RANGE

FIG. 7

FIG. 8

# FIG. 9

FIG. 10

## INTERNATIONAL SEARCH REPORT

International application No.

**PCT/JP2022/024372**

### A. CLASSIFICATION OF SUBJECT MATTER

***B01D 53/047***(2006.01)i
FI:   B01D53/047

According to International Patent Classification (IPC) or to both national classification and IPC

### B. FIELDS SEARCHED

Minimum documentation searched (classification system followed by classification symbols)

B01D53/047,C01B32/50

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 63-197513 A (HITACHI, LTD.) 16 August 1988 (1988-08-16) | 1-16 |
| A | JP 8-323127 A (L'AIR LIQUIDE, SOCIETE ANONYME POUR L'ETUDE ET L'EXPLOITATION DES PROCEDES GEORGES CLAUDE) 10 December 1996 (1996-12-10) | 1-16 |
| A | WO 2018/135164 A1 (JFE STEEL CORP.) 26 July 2018 (2018-07-26) | 4, 11 |
| A | JP 2000-317244 A (NIPPON OXYGEN CO., LTD.) 21 November 2000 (2000-11-21) | 5-6, 14-15 |
| A | JP 60-110318 A (GREEN & KELLOGG INC.) 15 June 1985 (1985-06-15) | 1-16 |
| A | JP 9-25102 A (MITSUI TOATSU CHEMICALS INC.) 28 January 1997 (1997-01-28) | 1-16 |
| A | JP 10-263352 A (MITSUI ENG & SHIPBUILD CO., LTD.) 06 October 1998 (1998-10-06) | 1-16 |
| A | US 2009/0214407 A1 (REYES, Sebastian C.) 27 August 2009 (2009-08-27) | 1-16 |
| A | JP 11-104430 A (L'AIR LIQUIDE, SOCIETE ANONYME POUR L'ETUDE ET L'EXPLOITATION DES PROCEDES GEORGES CLAUDE) 20 April 1999 (1999-04-20) | 1-16 |

☑ Further documents are listed in the continuation of Box C.      ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/024372** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 55-75725 A (LINDE AG) 07 June 1980 (1980-06-07) | 1-16 |

Form PCT/ISA/210 (second sheet) (January 2015)

EP 4 342 571 A1

**INTERNATIONAL SEARCH REPORT**
Information on patent family members

International application No.

**PCT/JP2022/024372**

| Patent document cited in search report | | | Publication date (day/month/year) | Patent family member(s) | | | Publication date (day/month/year) |
|---|---|---|---|---|---|---|---|
| JP | 63-197513 | A | 16 August 1988 | (Family: none) | | | |
| JP | 8-323127 | A | 10 December 1996 | US | 6336956 | B1 | |
| | | | | EP | 733394 | A1 | |
| | | | | FR | 2731918 | A1 | |
| | | | | CN | 1137939 | A | |
| WO | 2018/135164 | A1 | 26 July 2018 | US | 2020/0047108 | A1 | |
| | | | | EP | 3549657 | A1 | |
| | | | | CN | 110198775 | A | |
| | | | | KR | 10-2019-0102288 | A | |
| JP | 2000-317244 | A | 21 November 2000 | US | 6471749 | B1 | |
| JP | 60-110318 | A | 15 June 1985 | US | 4561865 | A | |
| | | | | GB | 2148737 | A | |
| | | | | DE | 3432896 | A1 | |
| | | | | FR | 2554011 | A1 | |
| | | | | FR | 2557808 | A1 | |
| | | | | CH | 673233 | A5 | |
| JP | 9-25102 | A | 28 January 1997 | (Family: none) | | | |
| JP | 10-263352 | A | 06 October 1998 | (Family: none) | | | |
| US | 2009/0214407 | A1 | 27 August 2009 | WO | 2009/105255 | A2 | |
| | | | | CA | 2716323 | A1 | |
| | | | | CN | 102015065 | A | |
| JP | 11-104430 | A | 20 April 1999 | US | 6030435 | A | |
| | | | | EP | 894521 | A1 | |
| | | | | FR | 2766384 | A1 | |
| JP | 55-75725 | A | 07 June 1980 | US | 4299595 | A | |
| | | | | EP | 11872 | A1 | |
| | | | | DE | 2851847 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018114464 A